Europäisches Patentamt

European Patent Office

Office européen des brevets

(11) Publication number: **0 238 689 B1**

# EUROPEAN PATENT SPECIFICATION

(45) Date of publication of patent specification: **02.09.92** (51) Int. Cl.⁵: **G10L 5/06**

(21) Application number: **86104216.6**

(22) Date of filing: **27.03.86**

(54) Method for performing acoustic matching in a speech recognition system.

(43) Date of publication of application:
**30.09.87 Bulletin 87/40**

(45) Publication of the grant of the patent:
**02.09.92 Bulletin 92/36**

(84) Designated Contracting States:
**CH DE FR GB IT LI NL SE**

(56) References cited:

**RESEARCH DISCLOSURE, no. 256, August 1985, page 418, Emsworth, Hampshire, GB: "Composite fenemic phones"**

**IEEE INTERNATIONAL CONFERENCE ON ACOUSTICS, SPEECH AND SIGNAL PROCESSING, Paris, FR, 3rd-5th May 1982, vol. 3, pages 1616-1620, IEEE, New York, US; J.-P. HATON et al.: "Problems in the design and use of a connected speech understanding system"**

(73) Proprietor: **International Business Machines Corporation**
**Old Orchard Road**
**Armonk, N.Y. 10504(US)**

(72) Inventor: **Bahl, Lalit Rai**
**Elisha Purdy Road**
**Amawalk, N.Y. 10501(US)**
Inventor: **Mercer, Robert Leroy**
**669 Viewland Drive**
**Yorktown Heights, N.Y. 10598(US)**
Inventor: **Degennaro, Steven Vincent**
**38 Coulter Avenue**
**Pawling, N.Y. 12564(US)**

(74) Representative: **Barth, Carl Otto**
**IBM Corporation Säumerstrasse 4**
**CH-8803 Rüschlikon(CH)**

## Description

The present invention relates primarily to the art of speech recognition, specifically the art of performing a statistical match between vocabulary words and incoming labels produced by an acoustic processor in response to a speech waveform input.

DESCRIPTION OF THE PRIOR ART

Typically, the purpose of a speech recognition system or machine is to automatically transform natural speech into some other form, for example written form. In achieving this aim, various general approaches have been considered. One approach is directed to simulating human speech interpretation processes. Another approach is to view speech in a statistical context.

In the statistical approach itself, several techniques have been considered as suggested by the Bahl, Jelinek, and Mercer article, "A Maximum Likelihood Approach to Continuous Speech Recognition," IEEE Transactions on Pattern Analysis and Machine Intelligence, Volume PAMI-5, Number 2, pp. 179-190 (1983). In the Bahl et al. article, it is noted that the typical model of a speech recognition system includes a text generator followed by a speaker, or talker. The text generator determines what is to be said and the speaker produces a natural speech waveform. The natural speech waveform enters an acoustic processor the output from which enters a linguistic decoder. Depending on the technique employed, the above-noted elements may be associated in various ways. Bahl et al. combine the speaker and acoustic processor to function as an acoustic channel wherein the speaker provides text as a speech waveform and wherein the acoustic processor acts as a data compressor which provides a string of labels (also referred to as symbols or fenemes) to the linguistic decoder. The labels may be generated in any of a number of ways and are commonly identified collectively as the string Y made up of sequential labels $y_1 y_2 y_3$ ---. The purpose of the linguistic decoder is to represent the original spoken text, in some prescribed form, based on the incoming string of labels.

In the above-noted article, which is incorporated herein by reference, one acoustic processor -- the IBM centisecond acoustic processor (CSAP) -- is described as transforming the speech waveform into a string of parameter vectors. Each parameter vector is compared to stored prototypes (or standard vectors) -- the distance from the parameter vector and each prototype being determined. The "label" for the prototype which is closest is then assigned to the waveform parameter vector. The label can have any of various forms and may be determined in any of various known manners in accordance with existing technology.

The purpose of the linguistic decoder is to perform a matching process between the incoming labels and words provided in the system vocabulary. In the probabilistic approach set forth in the Bahl et al. article, the linguistic decoder aims at determining a word string W that has the highest probability of having produced the string of labels $y_1 y_2 y_3$ ---. Mathematically, this is represented by the expression:

$$\text{MaxPr}(W|Y), \quad (1)$$

the maximum probability of W given Y over all word strings W. According to well-known probability theory, this can be written as:

$$Pr(W|Y) = Pr(W) \times Pr(Y|W)/Pr(Y) \quad (2)$$

where Pr(Y) is independent of W and the probability of a given word string W, namely Pr(W), is determined by a language model in the linguistic decoder.

Suppose that at some point in the decoding process some initial substring, for example $y_1 y_2 ... y_T$, has been tentatively decoded as the word string $W_1 W_2 ... W_n$. The present invention is directed to determining a set of candidate words $W_{(n+1)}$ for which

$$Pr(W_{(n+1)}|y_1 ... y_T y_{T+1} ... y_{T+k}, W_1 ... W_n)$$

is relatively large --compared to other words in the vocabulary-- for some value of k.

In determining Pr(Y|W), Markov modelling has been considered. The number of computations required by several linguistic decoding techniques is noted in the Bahl et al. article as being fairly high, especially with larger vocabularies on the order of 5000 words and more for example.

A key question in linguistic decoding has therefore been how to determine Pr(Y|W) for word strings from a vocabulary without requiring inordinate computation time and without sacrificing accuracy in decoding.

The nearest prior art known to the applicant is given by the prior not pre-published European patent 0.191.354. This patent relates to a method for speech recognition. A method for increasing the efficiency of a speech recognition system based on a vocabulary of statistical word models is disclosed. No solution of the objects of the present invention is given.

This object and others are addressed by the present invention.

The present invention is disclosed in the attached claims.

In accordance with the present invention, a linguistic decoder is provided which facilitates the determination of which word or words in a vocabulary have the highest probability of producing a particular string of labels. To achieve this object, the present invention features apparatus and method for performing a statistical match of words to labels with a number of approximations that expedite the matching determination without introducing undesired loss in accuracy. In addtion, the present invention relates to a method wherein words having similar phonetic beginnings are matched against the incoming labels simultaneously for so long as the words have similar phonetic beginnings.

In noting the approximations embodied in the invention, it should be recognized that the invention models each vocabulary word as a sequence of phones. Each phone is represented by a phone machine. Each phone machine is precisely characterized as having (a) a plurality of states, (b) transitions from state to state and a probability associated with each transition, and (c) an actual output probability that a given label is produced by a given phone machine at a given transition -- each phone machine (corresponding to a given phone) defining the probability that a given label is generated at a given transition thereof. It is possible to determine match scores for words based on these characteristics, however the number of computations is high. In accordance with the present invention, preferably each phone machine is simplified by replacing the actual label probability for each label at all transitions in a given phone machine with a specific replacement value. The specific replacement value is preferably selected so that the match value for a given phone with the replacement value included is an overestimation of the match value achieved by the detailed match where the replacement values do not replace the actual label probabilities. One way of assuring this condition is by selecting each replacement value so that no probability corresponding to a given label in a given phone machine is greater than the replacement value thereof. By substituting the actual label probabilities in a phone machine with corresponding replacement values, the number of required computations in determining a match score for a word is reduced greatly. Moreover, since the replacement value is preferably an overestimation, the resulting match score is not less than would have previously been determined without the replacement. Accordingly, the object of reducing computation without eliminating likely candidate words is achieved.

Another approximation relates to an additional factor that enters into the determination of a match score between a word and a string of labels, namely a label length distribution associated with each particular phone machine. That is, for each phone machine, there is a probability distribution that each number of labels contained between a minimum $L_{min}$ and a maximum number of labels $L_{max}$ is produced by the particular phone machine. To further facilitate and reduce computation in accordance with the invention, the label length probability distribution (between the minimum length and maximum length of labels) is considered uniform so that the probability of each length of labels (between $L_{min}$ and $L_{max}$) is the same.

As an additional refinement, the present invention includes a limitation on the number of labels examined by the phone machines in order to determine a match value between a corresponding word and a string of incoming labels. This added feature achieves the objects of reducing decoding delay and reducing inequalities arising from comparing match scores for words of different lengths.

Further, it is an object of the invention to derive a list of candidate words by means of a basic fast match (which approximates actual label probabilities for each label in given phone with a respective replacement value) or an alternative fast match (which also approximates label length probabilities with a specified value for a given phone) wherein the candidate words are processed by successive detailed match phone machines and/or a language model in order to arrive at a single word and, as appropriate, some possible alternatives--especially where the fast match machines limit the number of incoming labels examined to determine a match value for a phone.

In achieving the object of processing the beginnings of words simultaneously, the present invention defines words or portions thereof as phonetic baseforms arranged in a tree structure. Each baseform, it is noted, is represented by a sequence of phones each of which has its own phone machine corresponding thereto. For each baseform, a sequence of phone machines extends from the root of the tree. For so long as two or more baseforms have similar phonetic beginnings starting from the root, a common branch of phone machines is provided therefor. Two or more baseforms can thereby be selected or eliminated as candidate words by simultaneously processing them through the same phone machines at the same time for so long as the baseforms have similar beginnings. The object of reducing computation without loss in accuracy is thereby further achieved.

In a preferred form, the invention relates to performing an acoustic match in a linguistic decoder wherein each phone machine therein is characterized as having (a) a plurality of states and transition paths between states, (b) transitions tr-$(S_j/S_i)$ having probabilities $T(i{\rightarrow}j)$ each of which represents the probability of a transition to a state $S_j$ given a current state $S_i$ where $S_i$ and $S_j$ may be the same state or different states, and (c) actual label probabilities wherein each actual label probability $p(y_k|i \rightarrow j)$ indicates the probability that a label $y_k$ is produced by a given phone machine at a given transition from one state to a subsequent state where k is a label identifying notation; each phone machine including (a) means for assigning to each $y_k$ in said each phone machine a single specific value $p'(y_k)$ and (b) means for replacing each actual output probability $p(y_k|i \rightarrow j)$ at each transition in a given phone machine by the single specific value $p'(y_k)$ assigned to the corresponding $y_k$.

Preferably, the replacement value is at least as great as the maximum actual label probability for the corresponding $y_k$ label at any transistion in a particular phone machine.

The foregoing and other objects, features and advantages of the invention will be apparent from the more particular description of the preferred embodiments of the invention, as illustrated in the accompanying drawing.

BRIEF DESCRIPTION OF THE DRAWINGS

FIG. 1 is an illustration of a tree structure of baseforms according to the invention.

FIG. 2 is an illustration of an example detailed match phone machine in accordance with the invention.

FIG. 3 is a trellis diagram showing the state transitions over time for the detailed match phone machine.

FIG. 4 is a general diagram of a phone machine according to the invention.

FIG. 5 is a diagram showing a fast machine computation under predefined conditions.

FIG. 6 is an illustration showing the derivation of a start-time distribution for a phone from the end-time distribution generated by the phone machine corresponding to the most recent previous phone.

FIG. 7 is an illustration of an alternative fast match phone machine according to the invention.

FIG. 8 is an illustration of an alternative fast match phone machine wherein the number of labels examined in the matching procedure is limited in accordance with the invention.

In the drawings, like elements are designated with similar reference numbers, and identical elements in different specific embodiments are designated by identical reference numbers.

DESCRIPTION OF PREFERRED EMBODIMENTS OF THE INVENTION

I. TREE STRUCTURE OF BASEFORMS

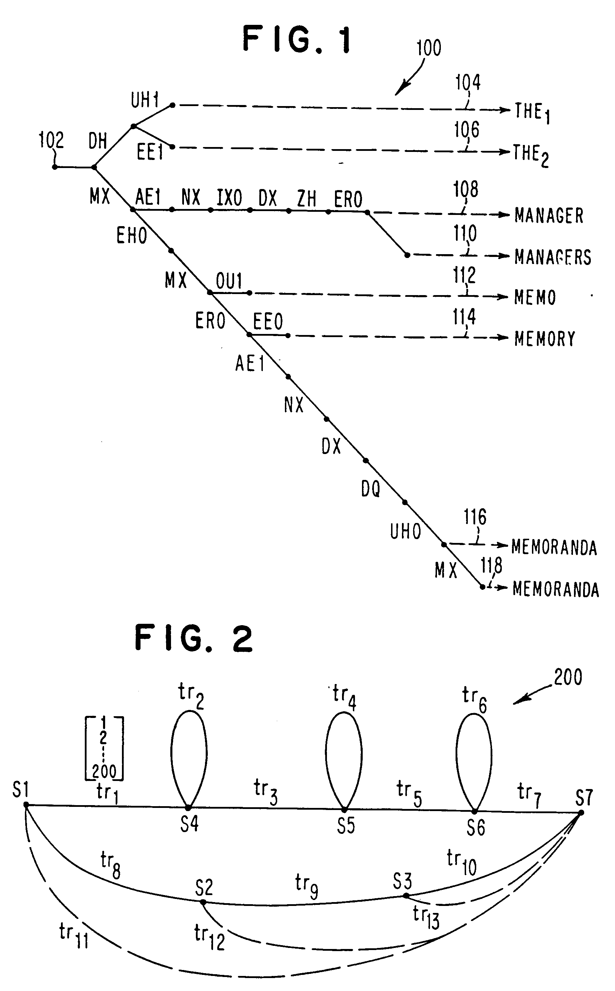

In Fig. 1, a plurality of words are arranged in a tree structure 100. The tree has a root 102 from which a plurality of baseforms extend. Each baseform is a phonetic baseform and extends to a leaf of the tree, each leaf of the tree representing a word in the vocabulary. Preferably, the vocabulary is on the order of 5000 words or more, although smaller vocabularies may also be employed.

Each baseform is shown including a string of phones, each baseform starting at the root 102 of the tree structure 100 and ending at a respective leaf. A number of baseforms, it is noted, have similar phonetic beginnings. For so long as a plurality of baseforms have similar phonetic beginnings, such baseforms share common initial branches along the tree structure 100. Starting at the tree root 102, the baseforms 108 through 118 for manager, managers, memo, memory, memoranda, and memorandum, respectively, all extend along a common branch identified as the phonetic element MX. Similarly, the baseforms 112 through 118 further extend together along the branches identified as the phonetic elements MX, EHO, MX. Where the baseforms depart phonetically, the tree structure 100 branches in different directions. In accordance with the invention, the matching of phonetic elements MX and then EHO is performed once for all the baseforms 112 through 118. That is, baseforms are not examined separately one at a time. Instead, processing takes places along branches in the tree structure 100 so that words having similar phonetic beginnings are processed simultaneously for so long as their respective phones lie along a common path of branches. By processing along the common path, a number of words may be considered simultaneously for inclusion in a list of candidate words from which the actual recognized word may be selected. Likewise, a number of words can be eliminated simultaneously.

In Fig. 1, the phonetic elements are phones each of which corresponds to a conventionally defined sound. When strung together, the phones form word-representing baseforms. For example, a first pronunciation of the word "the" is represented by the phone DH followed by the phone UH1. Approximately 70 to 100 phones, when appropriately selected and strung together, can represent the words in the English language.

A word --when pronounced in more than one way-- is represented in Fig. 1 by distinct strings of conventional phones, as suggested by the distinct baseforms for the two pronunciations of the word "the", namely $THE_1$ and $THE_2$. Alternatively, the same word may be represented by a baseform of "clinks" wherein each clink can represent various pronunciations of a particular portion of a word. The two pronunciations after the DH for the word "the" could be represented by a single clink which would account for the UH1 and EE1 phones. Similarly, a sequence of phones may be in parallel with one or more other phones as alternative pronunciations for the same segment of a word or string of words --the parallel paths together representing a clink. Parallel paths which cross word boundaries can also be represented by a clink. Whether defining baseforms in terms of conventional phones or clinks, similar principles are involved. Hence, in this patent application, references hereafter to "phones" are considered generic to include conventional phones, clinks and other similar phonetic elements which represent elemental inputs.

## II. PHONE MACHINES

### A. INTRODUCTION

In the present invention, a statistical determination is made as to which words in the vocabulary have the highest probability of having generated a string of incoming labels generated by an acoustic channel. As noted hereinbefore, each word is represented by a sequence of phones. Each phone is, in turn, characterized by a respective phone machine. Each phone machine stores data which provides an indication of the likelihood that the phone corresponding thereto generates any label string. When a particular label string is entered into a given phone machine, the given phone machine determines --from its stored data-- the likelihood that the given phone machine produces the particular incoming label string.

As described below, phone machines of several types are embodied in accordance with the invention. First, there is a detailed match phone machine which incorporates predefined probabilities into a phone model. The detailed match phone machine is characterized by (a) a plurality of states and transitions between the states; (b) a probability associated with each transistion, that the particular transition occurs; and (c) a probability that, at a given transition, a particular label is generated by the phone. While the detailed match phone machine can be used in determining with great exactness how closely a phone matches a string of incoming labels, tremendous calculation demands attend the detailed match phone machine. To overcome the calculation demands associated with the detailed match phone machine, a second phone machine is considered by the invention. The second phone machine, hereafter referred to as a basic fast match phone machine, makes an approximation that simplifies calculations relative to the detailed match phone machine. Specifically, wherever a given label has a probability of occurring at any transistion in a given phone, that probability is assigned a single specific value --which preferably is at least as large as the highest probability of the label occurring at any transition in the phone. In a further embodiment, hereafter referred to as the alternative fast match, the probability of a phone generating a string of labels of any of a number of lengths is considered uniform by the phone machine corresponding thereto. In the alternative fast match phone machine, a minimum length and a maximum length are specified between which there is defined a length distribution. In the alternative fast match phone machine, the probability of any length within the length distribution is replaced by a single defined value and the probability of any length outside the distribution is zero. The alternative fast match phone machine can be applied to the basic fast match phone machine to further reduce the amount of calculation required in determining whether a word defined by a string of phone machines qualifies as a candidate word.

In accordance with the invention, a list of words is extracted from the vocabulary of words by processing the words through either basic fast match phone machines or through alternative fast match phone machines that preferably includes both label probability replacement values and length distribution replacement values. The words in the extracted list of words are thereafter processed by detailed match phone machines to arrive at a single word. In this regard, it should be realized that a language model (not described herein) is also preferably provided to eliminate inappropriate words. Language models, such as models employing trigrams, have been discussed in the art. Briefly, a language model employed with the invention includes probabilities for respective three word sequences occurring, such probabilities being based on data derived from a text. Specifically, the language model is implemented in PL/I on an IBM 4341 using an IBM 3350 disk drive for the language model storage. The IBM 4341 is also connected to the fast match processor, the detailed match processor, and the front end processor. In addition, the IBM 4341 is also connected to a work station implemented in, for example, Pascal on an Apollo Domain computer to enable a user to enter input to the system. The work station is connected to the host IBM 4341 through an IBM personal computer and a 3704 communications controller.

Each of the above-noted phone machines receives as inputs a start-time distribution and a string of labels and determines therefrom a match value which suggests the likelihood that a given phone produces a sequence of labels in the string.

Each of the above-mentioned types of phone machines is now described in greater detail.

## B. DETAILED MATCH PHONE MACHINE

In Fig. 2, a sample detailed match phone machine 200 is depicted. Each detailed match phone machine is a probabilistic finite-state machine characterized by (a) a plurality of states $S_i$, (b) a plurality of transitions $tr(S_j|S_i)$, some of the transitions extending between different states and some extending from a state back to itself, each transition having associated therewith a corresponding probability, and (c) for each label that can be generated at a particular transition, a corressponding actual label probability.

In Fig. 2, seven states $S_1$ through $S_7$ are provided and thirteen transitions tr1 through tr13 are provided in the detailed match phone machine 200. A review of Fig. 2 shows that phone machine 200 has three transitions with dashed line paths, namely transitions tr11, tr12, and tr13. At each of these three transitions, the phone can change from one state to another without producing a label and such a transition is, accordingly, referred to as a null transition. Along transitions tr1 through tr10 labels can be produced. Specifically, along each transition tr1 through tr10, one or more labels may have a distinct probability of being generated thereat. Preferably, for each transition there is a probability associated with each label that can be generated in the system. That is, if there are two hundred labels that can be selectively generated by the acoustic channel, each transition (that is not a null) has two hundred "actual label probabilities" associated therewith --each of which corresponds to the probability that a corresponding label is generated by the phone at the particular transition. The actual label probabilities for transition tr1 are represented by the symbol p followed by the bracketed column of numerals 1 through 200, each numeral representing a given label. For label 1, there is a probability $p|1|$ that the detailed phone machine 200 generates the label 1 at transition tr1. The various actual label probabilities are stored with relation to the label and a corresponding transition.

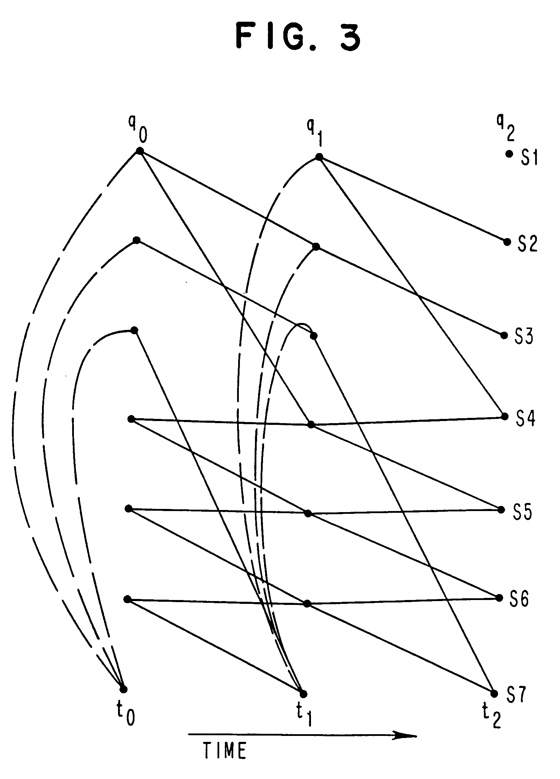

When a string of labels $y_1 y_2 y_3$--- is presented to a detailed match phone machine 200 corresponding to a given phone, a match procedure is performed. The procedure associated with the detailed match phone machine is explained with reference to Fig. 3.

Figure 3 is trellis diagram of the phone machine of Fig. 2. As in the phone machine, the trellis diagram shows a null transition from state $S_1$ to state $S_7$ and transitions from state $S_1$ to state $S_2$ and from state $S_1$ to state $S_4$. The transitions between other states are also illustrated. The trellis diagram also shows time measured in the horizontal direction. Start-time probabilities $q_0$ and $q_1$ represent the probabilities that a phone has a start time at time $t = t_0$ or $t = t_1$, respectively, for the phone. At each start time $t_0$ and $t_1$, the various transitions are shown. It should be noted, in this regard, that the interval between successive start (and end) times is preferably equal in length to the time interval of a label.

In employing the detailed match phone machine 200 to determine how closely a given phone matches the labels of an incoming string, an end-time distribution for the phone is sought and used in determining a match value for the phone. The notion of relying on the end-time distribution is common to all embodiment of phone machines according to the invention. In generating the end-time distribution to perform a detailed match, the detailed match phone machine 200 involves computations which are exact and complicated.

Looking at the trellis diagram of Fig. 3, we first consider the computations required to have both a start time and end time at time $t = t_0$. For this to be the case according to the example phone machine structure set forth in Fig. 2, the following probability applies:

$$Pr(S_7, t = t_0) = q_0 \times T(1 \rightarrow 7) + Pr(S_2, t = t_0) \times T(2 \rightarrow 7) + Pr(S_3, t = t_0) \times T(3 \rightarrow 7) \qquad (3)$$

where Pr represents "probability of" and T represents the transition probability between the two parenthetically identified states. The above equation indicates the respective probabilities for the three conditions under which the end time can occur at time $t = t_0$. Moreover, it is observed that the end time at $t = t_0$ is limited in the current example to occurrence at state $S_7$.

Looking next at the end time $t = t_1$, it is noted that a calculation relating to every state other than state $S_1$ must be made. The state $S_1$ starts at the end time of the previous phone. For purposes of explanation, only the calculations pertaining to state $S_4$ are set forth.

For state $S_4$, the calculation is :

$$Pr(S_4, t = t_1) = Pr(S_1, t = t_0) \times T(1 \rightarrow 4) \times Pr(y|1 \rightarrow 4) + Pr(S_4, t = t_0) \times T(4 \rightarrow 4) \times Pr(y|4 \rightarrow 4) \qquad (4)$$

In words, the equation (4) set forth immediately above indicates that the probability of the phone machine being in state $S_4$ at time $t = t_1$ is dependent on the sum of the following two terms (a) the probability of being at state $S_1$ at time $t = t_0$ multiplied by the probability (T) of the transition from state $S_1$ to state $S_4$ multiplied further by the probability (Pr) of a given label --y-- in the string being generated given a transition from state $S_1$ to state

$S_4$ and (b) the probability of being at state $S_4$ at time $t = t_0$ multiplied by the probability of the transition from state $S_4$ to itself and further multiplied by the probability of generating the given label --y-- during and given the transition from state $S_4$ to itself.

Similarly, calculations pertaining to the other states (excluding state $S_1$) are also performed to generate corresponding probabilities that the phone is at a particular state at time $t = t_1$. Generally, in determining the probability of being at a subject state at a given time, the invention (a) recognizes each previous state that has a transition which leads to the subject state and the respective probability of each such previous state; (b) recognizes, for each such previous state, a value representing the probability of the label that must be generated at the transition between each such previous state and the current state in order to conform to the label string; and (c) combines the probability of each previous state and the respective value representing the label probability to provide a subject state probability over a corresponding transition, the overall probability of being at the subject state being determined from the subject state probabilities over all transitions leading thereon. The calculation for state $S_7$, it is noted, includes terms relating to the three null transitions which permit the phone to start and end at time $t = t_1$ with the phone ending in state $S_7$.

As with the probability determinations relative to times $t = t_0$ and $t = t_1$, probability determinations for a series of other end times are preferably generated to form an end-time distribution. The value of the end-time distribution for a given phone provides an indication of how well the given phone matches the incoming labels.

In determining how well a word matches a string of incoming labels, the phones which represent the word are processed in sequence. Each phone generates an end-time distribution of probability values. A match value for the phone is obtained by summing up the end-time probabilities and then taking the logarithm of that sum. A start-time distribution for the next phone is derived by normalizing the end-time distribution by, for example, scaling each value thereof by dividing coach value by the sum so that the sum of scaled values totals one.

It should be realized that the present invention contemplates two methods of determining h, the number of phones to be examined for a given word or word string. In a depth first method, computation is made along a baseform --computing a running subtotal with each successive phone. When the subtotal is found to be below a predefined threshold for a given phone position therealong, the computation terminates. Alternatively, in a breadth first method, a computation for similar phone positions in each word is made. The computations following the first phone in each word, the second phone in each word, and so on are made. In the breadth first method, the computations along the same number of phones for the various words are compared at the same relative phone positions therealong. In either method, the word(s) having the largest sum of match values is the sought object.

As noted previously, a language model which stores information --such as tri-grams-- relating to words in context may be included to enhance the probability of a correct word selection. Language models have been reported in the literature.

The detailed match has been implemented in APAL (Array Processor Assembly Language) which is the native assembler for the Floating Point Systems, Inc. 190L. In this regard, it should be recognized that the detailed match requires considerable memory for storing each of the actual label probabilities (i.e., the probability that a given phone generates a given label y at a given transition); the transition probabilities for each phone machine; and the probabilities of a given phone being at a given state at a given time after a defined start time. The above-noted 190L is set up to make the various computations of end times, match values based on ,for example, a sum --preferably the logarithm of the sum of end time probabilities; start time based on the previously generated end time probabilities; and word match scores based on the match values for sequential phones in a word.

Because the detailed match is computationally expensive, the present invention includes a basic fast match and an alternative fast match which reduces the computation requirements without sacrificing accuracy.

The fast match embodiments are employed to define a list of on the order of ten to one hundred candidate words selected as the most likely words in the vocabulary to correspond to the incoming labels. The candidate words are preferably subjected to the language model and to the detailed match. By paring the number of words considered by the detailed match to on the order of 1% of the words in the vocabulary, the computational cost is greatly reduced while accuracy is maintained.

C. BASIC FAST MATCH

The basic fast match simplifies the detailed match by replacing with a single value the actual label probabilities for a given label at all transistions at which the given label may be generated in a given phone machine. That is, regardless of the transition in a given phone machine whereat a label has a probability of occurring, the probability is replaced by a single specific value. The value is preferably an overestimate, being at least as great as the largest probability of the label occurring at any transition in the given phone machine.

By setting the label probability replacement value as the maximum of the actual label probabilities for the given label in the given phone machine, it is assured that the match value generated with the basic fast match is at least as high as the match value that would result from employing the detailed match. In this way, the basic fast match typically overestimates the match value of each phone so that more words are generally selected as candidate words. Words considered candidates according to the detailed match also pass muster in accordance with the basic fast match.

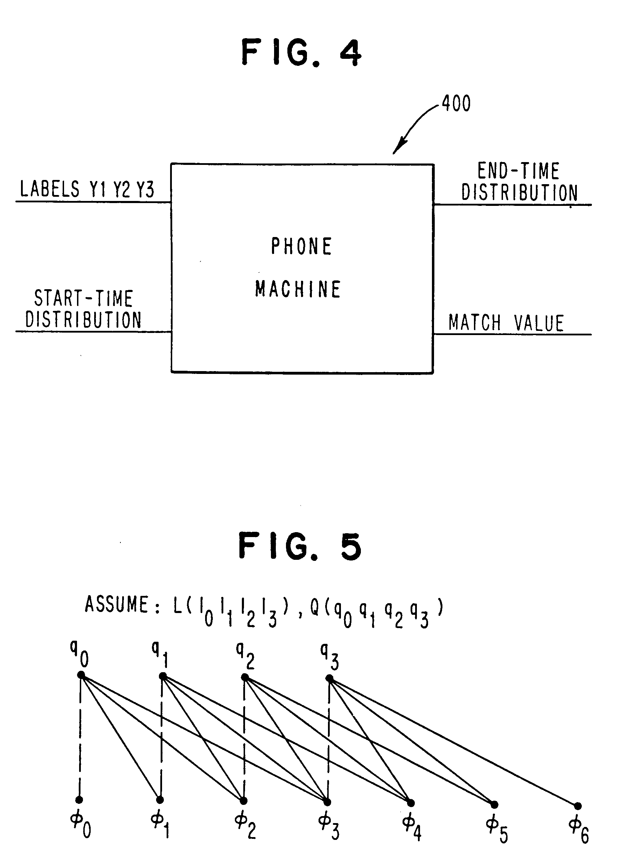

Referring to Fig. 4, a phone machine 400 for the basic fast match is illustrated. Labels (also referred to as symbols and fenemes) enter the basic fast match phone machine 400 together with a start-time distribution. The start-time distribution and the label string input is like that entering the detailed match phone machine described hereinabove. It should be realized that the start time may, on occasion, not be a distribution over a plurality of times but may, instead, represent a precise time --for example following an interval of silence-- at which the phone begins. When speech is continuous, however, the end-time distribution is used to define the start-time distribution (as is discussed in greater detail hereinbelow). The phone machine 400 generates an end-time distribution and a match value for the particular phone from the generated end-time distribution. The match score for a word is defined as the sum of match values for component phones --at least the first h phones in the word.

Referring now to Fig. 5, a diagram of a basic fast match computation is illustrated. The basic fast match computation is only concerned with the start-time distribution, the number --or length of labels-- produced by the phone, and the replacement values

$$p'_{y_k}$$

associated with each label $y_k$. By substituting all actual label probabilities for a given label in a given phone machine by a corresponding replacement value, the basic fast match replaces transition probabilities with length distribution probabilities and obviates the need for including actual label probabilities (which can differ for each transition in a given phone machine) and probabilities of being at a given state at a given time.

In this regard, the length distributions are determined from the detailed match model. Specifically, for each length in the length distribution, the invention preferably examines each state individually and determines for each state the various transition paths by which the currently examined state can occur (a) given a particular label length and (b) regardless of the outputs along the transitions. The probabilities for all transition paths of the particular length to each subject state are summed and the sums for all the subject states are then added to indicate the probability of a given length in the distribution. The above procedure is repeated for each length. In accordance with the preferred form of the invention, these computations are made with reference to a trellis diagram as is known in the art of Markov modelling. For transition paths which share branches along the trellis structure, the computation for each common branch need be made only once and is applied to each path that includes the common branch.

In the diagram of Fig. 5, two limitations are included by way of example. First, it is assumed that the length of labels produced by the phone can be zero, one, two, or three having respective probabilities of $l_0$, $l_1$, $l_2$, and $l_3$. The start time is also limited, permitting only four start times having respective probabilities of $q_0$, $q_1$, $q_2$, and $q_3$. With these limitations, the following equations define the end-time distribution of a subject phone as:

$$\Phi_0 = q_0 l_0$$
$$\Phi_1 = q_1 l_0 + q_0 l_1 p_1$$
$$\Phi_2 = q_2 l_0 + q_1 l_1 p_2 + q_0 l_2 p_1 p_2$$
$$\Phi_3 = q_3 l_0 + q_2 l_1 p_3 + q_1 l_2 p_2 p_3 + q_0 l_3 p_1 p_2 p_3$$
$$\Phi_4 = q_3 l_1 p_4 + q_2 l_2 p_3 p_4 + q_1 l_3 p_2 p_3 p_4$$
$$\Phi_5 = q_3 l_2 p_4 p_5 + q_2 l_3 p_3 p_4 p_5$$
$$\Phi_6 = q_3 l_3 p_4 p_5 p_6$$

In examining the equations, it is observed that $\Phi_3$ includes a term corresponding to each of four start times. The first team represents the probability that the phone starts at time $t = t_3$ and produces a length of zero labels --the phone starting and ending at the same time. The second term represents the probability that the phone starts at time $t = t_2$, that the length of labels is one, and that a label 3 is produced by the phone. The third term represents the probability that the phone starts at time $t = t_1$, that the length of labels is two (namely labels 2 and 3), and that labels 2 and 3 are produced by the phone. Similarly, the fourth term represents the probability that the phone starts at time $t = t_0$; that the length of labels is three; and that the three labels 1, 2, and 3 are produced by the phone.

Comparing the computations required in the basic fast match with those required by the detailed match suggest the relative simplicity of the former relative to the latter. In this regard, it is noted that the

$$P'_{y_k}$$

value remains the same for each appearance in all the equations as do the label length probabilities. Moreover, with the length and start time limitations, the computations for the later end times become simpler. For example, at $\Phi_6$, the phone must start at time $t = t_3$ and all three labels 4, 5, and 6 must be produced by the phone for that end time to apply.

In generating a match value for a subject phone, the end time probabilities along the defined end-time distribution are summed. If desired, the log of the sum is taken to provide the expression:

match value $= \log_{10}(\Phi_0 + \text{---} + \Phi_6)$

As noted previously, a match score for a word is readily determined by summing the match values for successive phones in a particular word.

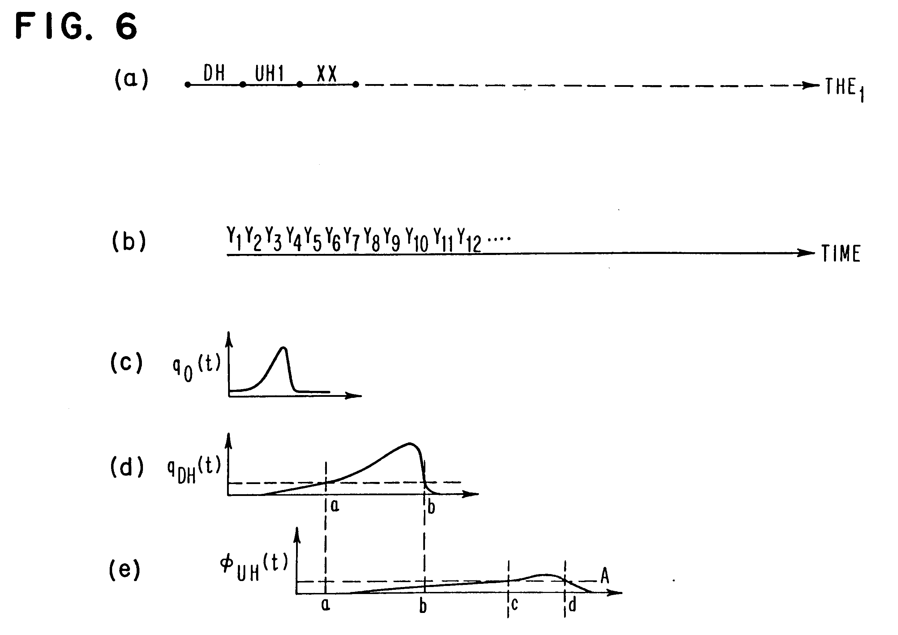

In describing the generating of the start time distribtion, reference is made to Fig. 6. In Fig. 6(a), the word THE$_1$ is repeated, broken down into its component phones. In Fig. 6(b), the string of labels is depicted over time. In Fig. 6(c), a first start-time distribution is shown. The first start-time distribution has been derived from the end-time distribution of the most recent previous phone (in the previous word which may include a "word" of silence). Based on the label inputs and the start-time distribution of Fig. 6(c), the end-time distribution for the phone DH, $\Phi_{DH}$, is generated. The start-time distribution for the next phone, UH, is determined by recognizing the time during which the previous phone end-time distribution exceeded a threshold (A) in Fig. 6(d). (A) is determined individually for each end-time distribution. Preferably, (A) is a function of the sum of the end-time distribution values for a subject phone. The interval between times a and b thus represents the time during which the start-time distribution for the phone UH is set. (See Fig. 6(e).) The interval between times c and d in Fig. 6(e) corresponds to the times between which the end-time distribution for the phone DH exceeds the threshold (A) and between which the start-time distribution of the next phone is set. The values of the start-time distribution are obtained by normalizing the end-time distribution by, for example, dividing each end-time value by the sum of the end-time values which exceed the threshold (A).

The basic fast match phone machine 400 has been implemented in a Floating Point Systems Inc. 190L with an APAL program. Other hardware and software may also be used to develop a specific form of the invention by following the teachings set forth herein.

## D. ALTERNATIVE FAST MATCH

The basic fast match employed alone or, preferably, in conjunction with the detailed match and/or a language model greatly reduces computation requirements. To further reduce computational requirements, the present invention further simplifies the detailed match by defining a uniform label length distribution between two lengths --a minimum length $L_{min}$ and a maximum length $L_{max}$. In the basic fast match, the probabilities of a phone generating labels of a given length --namely $l_0$, $l_1$, $l_2$, etc.-- typically have differing values. According to the alternative fast match, the probability for each length of labels is replaced by a single uniform value.

Preferably, the minimum length is equal to the smallest length having a nonzero probability in the original length distribution, although other lengths may be selected if desired. The selection of the maximum length is more arbitrary than the selection of the minimum length, but is significant in that the probability of lengths less than the minimum and greater than the maximum are set as zero. By defining the length probability to exist between only the minimum length and the maximum length, a uniform pseudo-distribution can be set forth. In one approach, the uniform probability can be set as the average probability over the pseudo-distribution. Alternatively, the uniform probability can be set as the maximum of the length probabilities that are replaced by the uniform value.

The effect of characterizing all the label length probabilities as equal is readily observed with reference to the equations set forth above for the end-time distribution in the basic fast match. Specifically, the length probabilities can be factored out as a constant.

With $L_{min}$ being set at zero and all length probabilities being replaced by a single constant value, the end-time distribution can be characterized as:

$$\theta_m = \Phi_m / l = q_m + \theta_{m-1} p_m$$

where "I" is the single uniform replacement value and where the value for $p_m$ corresponds preferably to the replacement value for a given label being generated in the given phone at time m.

For the above equation for $\theta_m$, the match value is defined as :

match value $= \log_{10}(\theta_0 + \theta_1 + \text{---} + \theta_m) + \log_{10}(l)$

In comparing the basic fast match and the alternative fast match, it has been found that the number of required additions and multiplications are greatly reduced by employing the alternative fast match phone machines. With $L_{min} = 0$, it has been found that the basic fast match requires forty multiplications and twenty additions in that the length probabilities must be considered. With the alternative fast match, $\theta_m$ is determined recursively and requires one multiplication and one addition for each successive $\theta_m$.

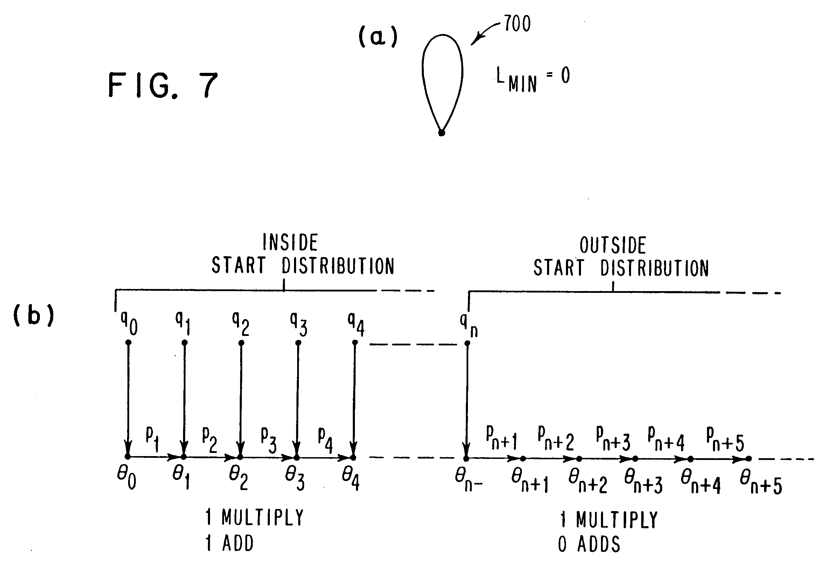

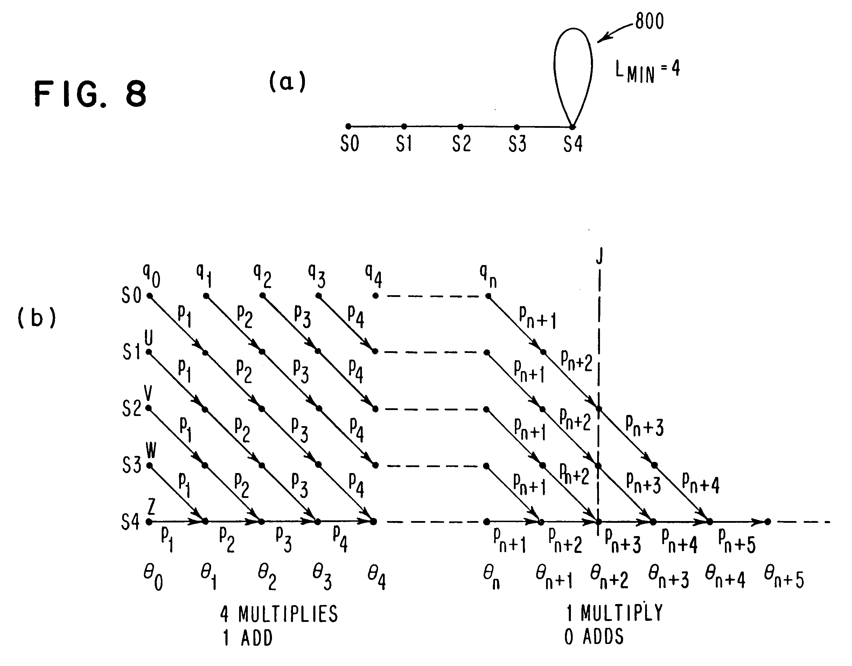

To further illustrate how the alternative fast match simplifies computations, Figures 7 and 8 are provided. In Fig. 7(a), a phone machine embodiment 700 corresponding to a minimum length $L_{min} = 0$ is depicted. the maximum length is assumed to be infinite so that the length distribution may be characterized as uniform. In Fig. 7(b), the trellis diagram resulting from the phone machine 700 is shown. Assuming that start times after $q_n$ are outside the start-time distribution, all determinations of each successive $\theta_m$ with m<n require one addition and one multiplication. For determinations of end times thereafter, there is only one required multiplication and no additions.

In Fig. 8, $L_{min}$ = 4. Fig. 8(a) illustrates a specific embodiment of a phone machine 800 therefor and Fig. 8(b) shows a corresponding trellis diagram. Because $L_{min} = 4$, the trellis diagram of Fig. 8(b) has a zero probability along the paths marked u, v, w, and z. For those end times which extend between $\theta_4$ and $\theta_n$, it is noted that four multiplications and one addition is required. For end times greater than n + 4, one multiplication and no additions are required. This embodiment has been implemented in APAL code on a FPS 190L.

It should be noted that additional states may be added to the Fig. 7 or Fig. 8 embodiments as desired in accordance with the invention. For example, any number of states with null transitions may be included without altering the value of $L_{min}$

## E. MATCHING BASED ON FIRST J LABELS

As a further refinement to the basic fast match and alternative fast match, the present invention contemplates that only the first J labels of a string which enters a phone machine be considered in the match. Assuming that labels are produced by the acoustic processor of an acoustic channel at the rate of one per centisecond, a reasonable value for J is one hundred. In other words, labels corresponding to on the order of one second of speech will be provided to determine a match between a phone and the labels entering the phone machine. By limiting the number of labels examined, two advantages are realized. First, decoding delay is reduced and, second, problem in comparing the scores of short words with long words are substantially avoided. The length of J can, of course, be varied as desired.

The effect of limiting the number of labels examined can be noted with reference to the trellis diagram of Fig. 8(b). Without the present refinement, the fast match score is the sum of the probabilities of $\theta_m$'s along the bottom row of the diagram. That is, the probability of being at state $S_4$ at each time starting at $t = t_0$ (for $L_{min} = 0$) or $t = t_4$ (for $L_{min} = 4$) is determined as a $\theta_m$ and all $\theta_m$'s are then totalled. For $L_{min} = 4$, there is no probability of being in state $S_4$ at any time before $t_4$. With the refinement, the summing of $\theta_m$'s terminates at time J. In Fig. 8(b), time J corresponds to time $t_{n+2}$.

Terminating the examination of J labels over J time intervals can result in the following two probability summations in deterred a match score. First, as described hereinbefore, there is a row calculation along the bottom row of the trellis diagram but only up to the time J-1. The probabilities of being in state $S_4$ at each time up to time J-1 are summed to form a row score. Second, there is a column score which corresponds to the sum of probabilities that the phone is at each respective state $S_0$ through $S_4$ at time J. That is, the column score is:

$$\text{column score} = \sum_{f=0}^{4} Pr(S_f, J)$$

The match score for a phone is obtained by summing the row score and column score and then taking the logarithm of that sum. To continue the fast match for the next phone, the values along the bottom row --preferably including time J-- are used to derive the next phone start-time distribution.

After determining a match score for each of b consecutive phones, the total for all phones is, as before noted, the sum of the match scores for all the phones.

In examining the manner in which the end-time probabilities are generated in the basic fast match and alternative fast match embodiments set forth above, it is noted that the determination of column scores does not conform readily to the fast match computations. To better adapt the refinement of limiting the number of labels examined to the fast match and alternative match, the present invention provides that the column score be replaced by an additional row score. That is, an additional row score is determined for the phone being at state S (in Figure 8(b)) between times J and J + K where K is the maximum number of states in any phone machine. Hence, if any phone machine has ten states, the present refinement adds ten end times along the bottom row of the trellis for each of which a probability is determined. All the probabilities along the bottom row up to and including the probability at time J+K are added to produce a match score for the given phone. As before, consecutive phone match values are summed to provide a word match score.

This embodiment has been implemented in APAL code on a FPS 190L; however as with other portions of the invention may be implemented with other codes on other systems.

## F. THE TREE STRUCTURE AND FAST MATCH EMBODIMENTS

By employing the basic fast match or alternative fast match --with or without the maximum label limitation-- the computational time required in determining phone match values is tremendously reduced. In addtion, the computational savings remain high.

Thus, while the invention has been described with reference to preferred embodiments thereof, it will be understood by those skilled in the art that various changes in form and details may be made without departing from the scope of the invention. For example, although it is preferred that each replacement value be no smaller than the maximum actual probability it replaces, other methods may also be employed to achieve the desired object of realizing an overestimated match value at least most of the time.

**Claims**

1. A method of performing an acoustic match of words in a vocabulary, each word being represented by a sequence of phones each of which is modeled by a phone machine, against a string of labels which represent a speech input, each phone machine containing probability values for events resulting from the respective phone, the method comprising the steps of:

   entering as inputs to the phone machine of a given phone (a) a string of labels and (b) a start-time distribution for the given phone, said start-time distribution including the probability values $q_n$ for different start times $t_n$ for the given phone, a first start-time distribution being derived from an end-time distribution of the most recent previous phone, the start-time distributions for the next phones being derived from the end-time distributions of the previous phones, respectively, and

   generating (I) an end-time distribution and (II) a match value of the given phone relative to the entered labels, based on the generated end-time distribution;

   the end-time distribution including the probability values $\Phi_n$ for different end times $t_n$ of the given phone,

   the end time probabilities $\Phi_n$ being determined as a function of the start-time distribution, the probabilities of the respective phone to generate a label string of each of various lengths, and the probability value $p(y_k)$ for each respective label $y_k$ that is to be generated by the phone to produce the incoming string of labels;

   the match value generated for the given phone corresponding to the probability that said particular phone produced the entered string of labels.

2. A method as in claim 1, wherein deriving the start-time distribution for the next phone includes the steps of:

   determining an interval in which the end time probabilities $\Phi_n$ of the current phone exceed a given threshold, and

   selecting the end time probabilities $\Phi_n$ within said interval and scaling them according to a predetermined rule, to obtain the start time probabilities $q_n$ for the next phone.

3. A method as in Claim 1 including, for each of the plurality of end times $\Phi_n$ which together form the end-time distribution, the steps of:

   determining a sum of product terms, each product term corresponding to (a) a start-time probability, (b) a label length probability, and (c) the probabilities of label outputs generated to provide the label length in the product term; and

   adding the sums of product terms to provide a match value for the respective phone.

4. A method as in Claim 1, said phone machine including the same length probability value for each of the possible lable string lenghts, and one label probability value for each label that can be produced by the particular phone; the method including the steps of:

   representing the probability $\Phi_n$ of each end time $t_n$ in the end-time distribution by a value $\Theta_n$ which is equal to the respective end time probability $\Phi_n$ divided by the uniform length probability, and

   recursively computing successive values of $\Theta_n$ corresponding to successive values of $\Phi_n$ each divided by the uniform length probability as:

   $$\Theta_n = q_n + \Theta_{n-1} \cdot p_n$$

   wherein $p_n$ is the probability for that label of the incoming label string, that is to be

generated at time $t_n$ by the phone to yield the respective end time $t_n$.

5. A method as in claim 4, including the additional steps of:
generating a match value for a given phone by adding the logarithm of the sum of all representative values $\Theta_n$ recursively computed, and the logarithm of the uniform length probability.

## Patentansprüche

1. Verfahren zum Durchführen eines akustischen Abgleichs von Wörtern in einem Vokabular, wobei jedes Wort durch eine Folge von Lauten repräsentiert ist, bei welchen jeder von einer Laut-Maschine modelliert wird, gegenüber einer Kette von Marken, die eine Spracheingabe repräsentieren, wobei jede Laut-Maschine Wahrscheinlichkeitswerte für Ereignisse besitzt, die sich aus dem entsprechenden Laut ergeben und das Verfahren die folgenden Schritte umfaßt:
Eingeben a) einer Kette von Marken und b) einer Startzeit-Verteilung für den gegebenen Laut als Eingaben in die Laut-Maschine für einen gegebenen Laut, wobei die Startzeit-Verteilung die Wahrscheinlichkeitswerte $q_n$ für verschiedene Startzeiten $t_n$ für den gegebenen Laut enthält, eine erste Startzeit-Verteilung aus einer Abschlußzeit-Verteilung des letzten vorangehenden Lauts abgeleitet wird und die Startzeit-Verteilungen für die nächsten Laute jeweils aus den Abschlußzeit-Verteilungen der vorangehenden Laute abgeleitet werden und
Erzeugen (I) einer Abschlußzeit-Verteilung und (II) eines Abgleichswerts des gegebenen Lauts bezüglich der eingegebenen Marken, beruhend auf der erzeugten Abschlußzeit-Verteilung, wobei die Abschlußzeit-Verteilung die Wahrscheinlichkeitswerte $\phi_n$ für verschiedene Abschlußzeiten $t_n$ des gegebenen Lauts enthält, die Abschlußzeit-Wahrscheinlichkeiten $\phi_n$ in Abhängigkeit von der Startzeit-Verteilung, die Wahrscheinlichkeiten des entsprechenden Lauts, um eine Markenkette mit verschiedenen Längen für jeden zu erzeugen, und der Wahrscheinlichkeitswert $p(y_k)$ für jede entsprechende Marke $y_k$, die von dem Laut erzeugt werden soll, um die einlaufende Kette von Marken zu erzeugen, bestimmt werden und
der für den gegebenen Laut erzeugte Abgleichswert der Wahrscheinlichkeit entspricht, daß der spezielle Laut die eingegebene Kette von Marken erzeugt hat.

2. Verfahren nach Anspruch 1, bei welchem das Ableiten der Startzeit-Verteilung für den nächsten Laut die folgenden Schritte umfaßt:
Bestimmen eines Intervalls, in welchem die Abschlußzeit-Wahrscheinlichkeiten $\phi_n$ des aktuellen Lauts eine gegebene Schwelle überschreiten und
Auswählen der Abschlußzeit-Wahrscheinlichkeiten $\phi_n$ innerhalb des Intervalls und Skalieren derselben entsprechend einer vorbestimmten Regel, um die Startzeit-Wahrscheinlichkeiten $q_n$ für den nächsten Laut zu erhalten.

3. Verfahren nach Anspruch 1, das für jede aus der Mehrzahl von Abschlußzeiten $\phi_n$, die miteinander die Abschlußzeit-Verteilung bilden, die folgenden Schritte umfaßt:
Bestimmen einer Summe von Produktgliedern, wobei jedes Produktglied (a) einer Startzeit-Verteilung, (b) einer Markenlänge-Wahrscheinlichkeit und (c) den Wahrscheinlichkeiten von Markenausgaben entspricht, die erzeugt werden, um die Markenlänge in dem Produktglied bereitzustellen und
Addieren der Summen von Produktgliedern, um einen Abgleichswert für den entsprechenden Laut bereitzustellen.

4. Verfahren nach Anspruch 1, wobei die Laut-Maschine denselben Wahrscheinlichkeitswert für Längen für jede der möglichen Markenkettenlängen und einen Wahrscheinlichkeitswert für Marken für jede Marke besitzt, die von dem speziellen Laut erzeugt werden kann, wobei das Verfahren die folgenden Schritte umfaßt:
Repräsentieren der Wahrscheinlichkeit $\phi_n$ jeder Abschlußzeit $t_n$ in der Abschlußzeit-Verteilung durch einen Wert $\Theta_n$, der gleich ist der entsprechenden Abschlußzeit-Wahrscheinlichkeit $\phi_n$ dividiert durch die Wahrscheinlichkeit für eine einheitliche Länge und
rekursives Berechnen aufeinanderfolgender Werte von $\Theta_n$, die aufeinanderfolgenden Werten von $\phi_n$, wobei jeder durch die Wahrscheinlichkeit für eine einheitliche Länge dividiert ist wie folgt entsprechen:

$$\Theta_n = q_n + \Theta_{n-1} \cdot p_n$$

wobei $P_n$ die Wahrscheinlichkeit für jene Marke der einlaufenden Markenkette ist, die zu der Zeit $t_n$ von dem Laut erzeugt werden soll, um die entsprechende Abschlußzeit $t_n$ zu ergeben.

5. Verfahren nach Anspruch 4, welches die folgenden zusätzlichen Schritte umfaßt:
Erzeugen eines Abgleichswerts für einen gegebenen Laut durch Addieren des Logarithmus der Summe aller repräsentativen rekursiv be-

rechneten Werte $\Theta_n$ und des Logarithmus der Wahrscheinlichkeit für eine einheitliche Länge.

**Revendications**

1. Procédé pour effectuer une comparaison acoustique de mots d'un vocabulaire, chaque mot étant représenté par une séquence d'éléments phonétiques dont chacun est modèlisé par une machine phonétique, par rapport à une chaîne d'étiquettes qui représentent une entrée de parole, chaque machine phonétique contenant des valeurs de probabilité pour des évènements résultant de l'élément phonétique respectif, le procédé comprenant les étapes de :

introduction, comme entrées à la machine phonétique d'un élément phonétique donné, de (a) une chaîne d'étiquettes et (b) une distribution d'instant de début pour l'élément phonétique considéré, ladite distribution d'instant de début incluant les valeurs de probabilité $q_n$ pour différents instants de début $t_n$ de l'élément phonétique considéré, une première distribution d'instant de début étant obtenue à partir d'une distribution d'instant de fin de l'élément phonétique précédent le plus récent, les distributions d'instant de début pour les éléments phonétiques suivants étant déterminées à partir des distributions d'instant de fin des éléments phonétiques précédents, respectivement, et

génération (I) d'une distribution d'instant de fin et (II) d'une valeur de concordance de l'élément phonétique considéré, par rapport aux étiquettes entrées, sur la base de la distribution d'instant de fin engendrée,

la distribution d'instant de fin incluant les valeurs de probabilité $\phi_n$ pour différents instants de fin $t_n$ de l'élément phonétique considéré,

les probabilités d'instant de fin $\phi_n$ étant déterminées en fonction de la distribution d'instant de début, des probabilités que l'élément phonétique respectif engendre une chaîne d'étiquettes de chacune de diverses longueurs, et de la valeur de probabilité $p(y_k)$ que chaque étiquette respective $y_k$ qui doit être engendrée par l'élément phonétique produise la chaîne d'étiquettes entrante ;

la valeur de concordance engendrée pour l'élément phonétique considéré correspondant à la probabilité que ledit élément phonétique particulier ait produit la chaîne d'étiquettes introduite.

2. Procédé suivant la revendication 1, dans lequel la détermination de la distribution d'instant de début pour l'élément phonétique suivant comprend les étapes de :

détermination d'un intervalle dans lequel les probabilités d'instant final $\phi_n$ de l'élément phonétique en cours dépassent un seuil donné, et

sélection des probabilités d'instant de fin $\phi_n$ à l'intérieur dudit intervalle et transformation d'échelle de ces probabiltés, conformément à une règle prédéterminée, pour obtenir les probabilités d'instant de début $q_n$ pour l'élément phonétique suivant.

3. Procédé suivant la revendication 1, comprenant, pour chacun de la pluralité d'instants de fin $\phi_n$ qui forment ensemble la distribution d'instant de fin, les étapes de :

détermination d'une somme de termes de produit, chaque terme de produit correspondant à (a) une probabilité d'instant de début, (b) une probabilté de longueur d'étiquette, et (c) aux probabilités que les sorties d'étiquettes engendrées fournissent la longueur d'étiquettes dans le terme de produit ; et

addition des sommes des termes de produit pour fournir une valeur de concordance pour l'élément phonétique respectif.

4. Procédé suivant la revendication 1, ladite machine phonétique incluant la même valeur de probabilité de longueur pour chacune des longueurs de chaînes d'étiquettes possibles, et une valeur de probabilité d'étiquette pour chaque étiquette qui peut être produite par l'élément phonétique particulier, le procédé comprenant les étapes de :

représentation de la probabilité $\phi_n$ de chaque instant de fin $t_n$ dans la distribution d'instant de fin par une valeur $\Theta_n$ qui est égale à la probabilité d'instant de fin respective $\phi_n$ divisée par la probabilité de longueur uniforme, et

calcul récursif de valeurs successives de $\Theta_n$ correspondant aux valeurs successives de $\phi_n$ divisées chacune par la probabilité de longueur uniforme, comme :

$$\Theta_n = q_n + \Theta_{n-1} \cdot p_n$$

$p_n$ étant la probabilité pour que cette étiquette de la chaîne d'étiquettes d'entrée, qui doit être engendrée à l'instant $t_n$ par l'élément phonétique, produise l'instant de fin respectif $t_n$ .

5. Procédé suivant la revendication 4, comprenant les étapes additionnelles de :

génération d'une valeur de concordance pour un élément phonétique donné, par addition du logarithme de la somme de toutes les valeurs représentatives $\Theta_n$ récursivement cal-

culées, et du logarithme de la probabilité de longueur uniforme.

# F I G. 1

# F I G. 2

# FIG. 3

# FIG. 4

```
                                              ╱ 400
                                             ╱
                    ┌──────────────────┐
LABELS Y1 Y2 Y3 ────┤                  ├──── END-TIME
                    │                  │      DISTRIBUTION
                    │      PHONE       │
                    │                  │
                    │     MACHINE      │
START-TIME          │                  │
DISTRIBUTION ───────┤                  ├──── MATCH VALUE
                    └──────────────────┘
```

# FIG. 5

ASSUME: $L(l_0\ l_1\ l_2\ l_3)$, $Q(q_0\ q_1\ q_2\ q_3)$

$q_0$  $q_1$  $q_2$  $q_3$

$\phi_0$  $\phi_1$  $\phi_2$  $\phi_3$  $\phi_4$  $\phi_5$  $\phi_6$

# FIG. 6

(a) •——DH——•——UH1——•——XX——• – – – – – – – – – – – – – – – – – – –→ $THE_1$

(b) $Y_1 Y_2 Y_3 Y_4 Y_5 Y_6 Y_7 Y_8 Y_9 Y_{10} Y_{11} Y_{12}$ .... ————————————————→ TIME

(c) $q_0(t)$

(d) $q_{DH}(t)$

(e) $\phi_{UH}(t)$

FIG. 7

(a)

$L_{MIN} = 0$

/700

(b)

INSIDE
START DISTRIBUTION

OUTSIDE
START DISTRIBUTION

$q_0$   $q_1$   $q_2$   $q_3$   $q_4$     $q_n$

$\theta_0$   $\theta_1$   $\theta_2$   $\theta_3$   $\theta_4$     $\theta_{n-}$   $\theta_{n+1}$   $\theta_{n+2}$   $\theta_{n+3}$   $\theta_{n+4}$   $\theta_{n+5}$

$P_1$   $P_2$   $P_3$   $P_4$     $P_{n+1}$   $P_{n+2}$   $P_{n+3}$   $P_{n+4}$   $P_{n+5}$

1 MULTIPLY
1 ADD

1 MULTIPLY
0 ADDS

EP 0 238 689 B1

# FIG. 8

(a)

$L_{MIN} = 4$

800

S0  S1  S2  S3  S4

(b)

4 MULTIPLIES
1 ADD

1 MULTIPLY
0 ADDS